# DEMANDE DE BREVET EUROPEEN

(11) **EP 1 128 582 A1**
(43) Date de publication de la demande: **29.08.2001**
(21) Numéro de dépôt: 01400139.0
(22) Date de dépôt: 18.01.2001
(51) Int. Cl.: H04B 10/17, H04J 14/02

(54) **Régénérateur pour système de transmission à multiplexage en longueur d'onde**

(30) Priorité: 21.02.2000 FR 0002089
(71) Demandeur: ALCATEL, 75008 Paris (FR)
(72) Inventeur: Desurvire, Emmanuel, 91680 Bruyeres le Chatel (FR)
(74) Mandataire: Lamoureux, Bernard

(57) **Abrégé**

L'invention concerne les systèmes de transmission à fibre optique à multiplexage en longueur d'onde. Elle propose un régénérateur comprenant un démultiplexeur (2) pour séparer les signaux de différents canaux, une pluralité de modulateurs optiques (4) recevant chacun des signaux provenant du démultiplexeur et une horloge de modulation (Bᵢ) provenant d'une unité de distribution d'horloges (16), et un multiplexeur (14) combinant les signaux modulés par les modulateurs. L'unité de distribution d'horloges présente une horloge de référence (22) et, pour chacun des modulateurs, des moyens de mise en phase d'une copie de l'horloge de référence avec les signaux appliqués au modulateur. On peut utiliser pour la mise en phase une boucle de verrouillage de phase, avec un décaleur de phase commandé en fonction de la puissance moyenne des signaux en sortie du modulateur.

L'invention permet de n'utiliser que des composants basse fréquence pour générer des horloges de modulation, à partir d'une unique horloge de référence.

## Description

L'invention concerne les systèmes de transmission par fibre optique à multiplexage en longueur d'onde, et plus précisément, la régénération des signaux par modulation optique dans de tels systèmes de transmission.

Il a été proposé, dans les systèmes de transmission à fibre optique à multiplexage en longueur d'onde, d'utiliser régulièrement une régénération périodique des signaux par modulation synchrone; une telle modulation est de préférence optique, tout particulièrement pour les systèmes à hauts débits. Se pose alors le problème des différences de vitesses de groupe entre les canaux, du fait des différences entre les longueurs d'onde et de la dispersion des fibres optiques de ligne. Ces différences de vitesses de groupe désynchronisent les temps bit des différents canaux, et empêchent la modulation synchrone simultanée des canaux du multiplex.

Une première solution à ce problème consiste à procéder à séparer les différents canaux avant de procéder pour chaque canal à la régénération par modulation synchrone. On peut ensuite multiplexer les canaux régénérés. Un régénérateur dans cette configuration est constitué d'autant de modulateurs synchrones qu'il y a de canaux, montés en parallèle; chaque régénérateur présente son propre circuit de récupération d'horloge - du fait du défaut de synchronicité des canaux. Cette solution est encombrante, coûteuse et consomme une puissance importante, du fait du nombre de circuits électroniques à répliquer pour la récupération d'horloge.

La demande de brevet français déposée le 19.02.99 sous le numéro 99 02 126 (F°102078) propose de ne régénérer dans un régénérateur qu'un sous-ensemble des canaux - et par exemple un canal sur quatre. L'ensemble des canaux est traité après plusieurs régénérateurs - quatre dans l'exemple. Cette solution réduit le nombre de modulateurs à monter en parallèle dans chaque régénérateur - d'un facteur quatre dans l'exemple. A performances égales, le nombre total de modulateurs dans le système de transmission reste le même; cette solution simplifie la structure d'un régénérateur, mais n'influe pas sur le coût ni sur la puissance consommée.

D'autres solutions au problème de la régénération synchrone consistent à resynchroniser périodiquement les différents canaux, pour procéder au point de synchronicité à une régénération simultanée des canaux. Un article de E.Desurvire, O.Leclerc et O. Audouin, Synchronous in-line regeneration of wavelength-division multiplexed solitons signais in optical fibers, Optics Letters, vol. 21, n° 14, pages 1026-1028 décrit un schéma d'allocation des longueurs d'ondes, qui soit compatible avec l'utilisation de modulateurs synchrones pour des signaux solitons. Cet article propose d'allouer des longueurs d'ondes aux différents canaux du multiplex de telle sorte que, pour des intervalles Z_{R} donnés entre les répéteurs, les signaux des différents canaux, ou plus exactement les temps bits des différents canaux du multiplex soient sensiblement synchronisés en arrivant aux répéteurs. On permet ainsi une modulation synchrone en ligne de tous les canaux, à des intervalles donnés, à l'aide de modulateurs synchrones discrets. Cette technique d'allocation des longueurs d'ondes du multiplex est aussi décrite dans la demande de brevet français FR-A-2 743 964 au nom de Alcatel Submarine Networks. Dans cet article, il est proposé de choisir un sous-groupe de canaux, synchrones non seulement à des intervalles Z_{R}, mais aussi à des intervalles sous multiples de Z_{R}.

O. Leclerc, E. Desurvire et O. Audouin, Synchronous WDM soliton régénération : towards 80-160 Gbit/s transoceanic systems, Optical Fiber Technology, 3 pages 97-116 (1997) précise que ce schéma d'allocation des longueurs d'ondes peut conduire à des intervalles Z_{R} trop importants entre les modulateurs synchrones, ou encore à des espacements trop importants entre les canaux du multiplex. Pour pallier ce problème, cet article note que dans un tel schéma d'allocation de longueurs d'onde, les temps bit de sous-ensembles de canaux du multiplex sont synchrones à des intervalles sous-multiples de Z_{R}. L'article propose en conséquence de régénérer, à des intervalles plus faibles, des sous-ensembles de canaux du multiplex. Toutefois, cette solution impose un filtrage des canaux du sous-ensemble à régénérer, et fait perdre au système de transmission la périodicité unique pour tous les canaux.

FR-A-2 770 001 propose d'utiliser un modulateur synchrone pour moduler les signaux solitons de tous les canaux d'un système de transmission à multiplexage en longueur d'onde à une fréquence N/T multiple de la fréquence d'horloge des signaux 1/T. On peut de la sorte relâcher la contrainte de synchronicité, en imposant non plus une synchronicité des temps bit, mais une synchronicité des différents canaux à un sous multiple du temps bit.

FR-A-2 759 516 propose de démultiplexer les différents canaux, et de leur appliquer les retards nécessaires pour les resynchroniser, Après multiplexage, les différents canaux peuvent être modulés à l'aide d'un modulateur optique unique. La demande de brevet français déposée sous le numéro 97 06 590 propose d'utiliser une chaîne de réseaux formés dans une fibre pour appliquer des retards adaptés, et ainsi resynchroniser les différents canaux sans devoir procéder à un démultiplexage et à un remultiplexage. M. Nakazawa et autres, 160 Gbit/s WDM (20 Gbit/s x 8 channels) soliton transmission over 10 000 km using in-line synchronous modulation and optical filtering, Electronics Letters, vol. 34 no 1 (1998), pp. 103-104 propose de resynchroniser les canaux d'un multiplex en longueurs d'onde en utilisant une fibre DCF (fibre de dispersion de compensation) différente pour chaque canal; cet article propose d'utiliser quatre modulateurs pour la régénération de huit canaux, trois des modulateurs traitant simultanément deux canaux.

Ces solutions présentent les inconvénients suivants. Les solutions passives - choix des longueurs d'onde ou application de retards fixes - présentent l'inconvénient d'une grande sensibilité aux caractéristiques du système de transmission, et notamment à la dispersion, à la température, au positionnement des régénérateurs. S'ajoute le problème du vieillissement des systèmes, et des variations corrélatives de ces caractéristiques.

L'invention propose une solution au problème de la régénération des canaux des systèmes de transmission à multiplexage en longueur d'onde. Elle permet de réduire le coût et la puissance consommée par les régénérateurs, sans pour autant imposer une contrainte sur le choix des longueurs d'onde.

Plus précisément, l'invention propose un régénérateur pour un système de transmission à multiplexage en longueur d'onde, comprenant un démultiplexeur pour séparer les signaux de différents canaux, une pluralité de modulateurs optiques recevant chacun des signaux provenant du démultiplexeur et une horloge de modulation Bᵢ provenant d'une unité de distribution d'horloges, et un multiplexeur combinant les signaux modulés par les dits modulateurs; l'unité de distribution d'horloges présente une horloge de référence et, pour chacun des modulateurs, des moyens de mise en phase d'une copie de l'horloge de référence avec les signaux appliqués au modulateur.

Dans un mode de réalisation, les moyens de mise en phase comprennent pour chacun des modulateurs une boucle de verrouillage en phase.

Dans ce cas, la boucle de verrouillage en phase peut avantageusement comprendre un décaleur de phase recevant une copie de l'horloge de référence et fournissant une horloge de modulation, le décaleur de phase étant commandé en fonction de la puissance moyenne des signaux de sortie du modulateur.

La boucle de verrouillage en phase comprend de préférence un coupleur prélevant une partie des signaux de sortie du modulateur et une photodiode recevant les signaux provenant du coupleur et fournissant une tension représentative de la puissance moyenne des signaux de sortie du modulateur.

Dans ce cas, le décaleur de phase est avantageusement commandé par un signal Cᵢ fonction de la différence entre la dite tension et une tension de référence V_{REF}.

La tension de référence peut être fonction de la puissance totale des signaux en sortie du régénérateur, ou peut être contrôlée à distance.

Dans un autre mode de réalisation de l'invention, l'horloge de référence est fournie par un oscillateur commandé en tension. Il peut notamment être commandé en fonction des signaux appliqués au régénérateur.

Dans encore un autre mode de réalisation, le régénérateur présente un coupleur prélevant une partie des signaux d'entrée du régénérateur, un circuit de récupération d'horloge recevant des signaux prélevés par le coupleur et fournissant en sortie un signal de commande de l'oscillateur

L'invention concerne enfin un système de transmission à multiplexage en longueur d'onde, comprenant un tel régénérateur.

D'autres caractéristiques et avantages de l'invention apparaîtront à la lecture de la description qui suit de modes de réalisation de l'invention, donnés à titre d'exemple et en référence aux dessins annexés, qui montrent
- figure 1, une représentation schématique d'un régénérateur selon l'invention;
- figure 2, une représentation schématique de l'unité de distribution d'horloges du régénérateur de la figure 1;
- figure 3,une représentation schématique d'un autre mode de réalisation de l'unité de distribution d'horloges du régénérateur de la figure 1.

L'invention propose, pour réduire le volume, le coût et la complexité des régénérateurs, de partager entre les modulateurs synchrones une unité de distribution d'horloges commune. L'unité de distribution d'horloges présente une horloge de référence, qui est répliquée en autant de copies que nécessaire; chaque copie est mise en phase avec un canal. On peut utiliser une boucle à verrouillage de phase pour mettre en phase les copies de l'horloge de référence et les canaux correspondants.

On donne dans la suite de l'invention un exemple de réalisation d'un régénérateur, dans un système de transmission à quatre canaux. L'invention n'est bien entendue pas limitée à ce nombre de canaux. Dans cet exemple, les quatre canaux sont modulés séparément; l'invention s'applique aussi bien au cas décrit dans l'article de M. Nakazawa, où certains des canaux sont modulés par un même modulateur.

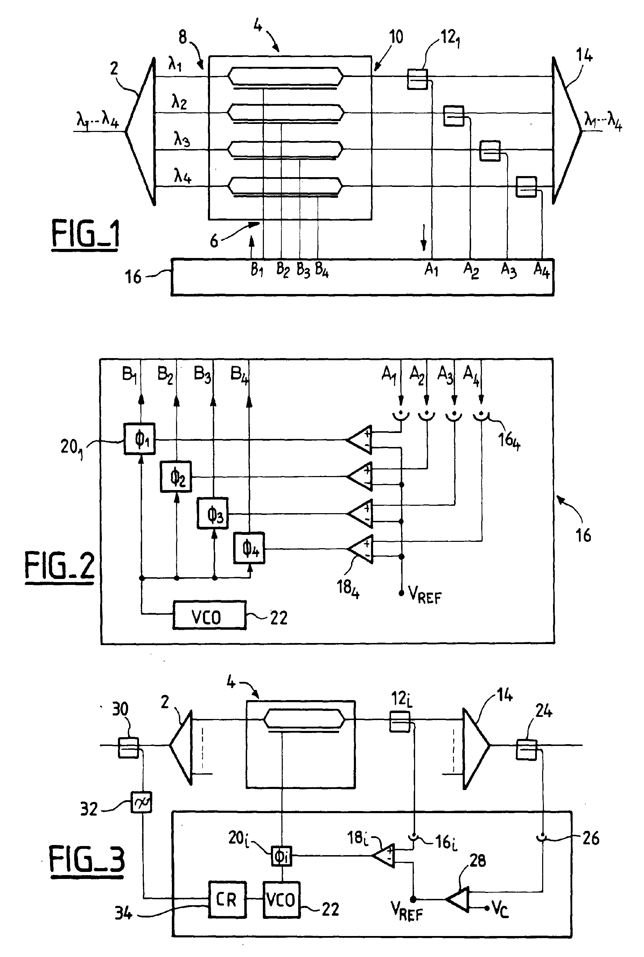

La figure 1 montre une représentation schématique d'un régénérateur selon l'invention; le régénérateur présente un démultiplexeur 2, qui reçoit en entrée les signaux multiplexés des différents canaux, et fournit en sortie les canaux séparés. Les canaux fournis en sortie du multiplexeur sont appliqués à un ensemble de modulateurs optiques. Comme ceci est connu en soi, les différents modulateurs peuvent être regroupés sur une même puce InP 4. Cette puce présente des entrées d'horloges 6 pour recevoir les horloges destinées à moduler les différents canaux, des entrées 8 pour recevoir les signaux des canaux séparés provenant du démultiplexeur 2, et des sorties 10 fournissant les signaux des différents canaux modulés par les horloges. En sortie des modulateurs sont prévus sur chacun des canaux un coupleur 12ᵢ, qui prélève une partie du signal modulé. Les signaux modulés sont ensuite combinés dans un multiplexeur 14.

Le régénérateur présente aussi une unité de distribution d'horloges 16, qui reçoit les signaux Aᵢ prélevés en sortie de modulateur sur chaque canal, et qui fournit des horloges Bᵢ à destination de chaque modulateur. Selon l'invention, l'horloge Bᵢ pour un canal λᵢ est obtenu par verrouillage en phase d'une horloge de référence, à partir du signal prélevé en sortie de modulateur pour le canal en cause.

Le fonctionnement du régénérateur de la figure 1 est le suivant. Les signaux des différents canaux sont séparés dans le multiplexeur 2, sont respectivement modulés par les différents modulateurs, puis sont recombinés dans le multiplexeur 14. L'unité de distribution d'horloges fournit les horloges nécessaires à la modulation; le fonctionnement de cette unité apparaît de façon plus détaillée dans la suite.

L'invention permet de partager l'unité de distribution d'horloges, et évite la multiplication des circuits proposés dans les régénérateurs de l'état de la technique. Le régénérateur assure en outre un verrouillage des horloges de modulation pour chacun des canaux, indépendamment des variations de la phase des différents canaux à l'émission; le régénérateur est aussi insensible aux variations de la puissance de sortie, notamment du fait de la localisation dans le système de transmission, des pannes ou interruptions de transmission sur les différents canaux.

La figure 2 montre une représentation schématique de l'unité de distribution d'horloges du régénérateur de la figure 1. Comme indiqué en référence à la figure, l'unité de distribution reçoit les signaux Aᵢ prélevés en aval des modulateurs et fournit des horloges Bᵢ. Les signaux prélevés en aval des modulateurs sont fournis à des photodiodes basse fréquence 16ᵢ; celles-ci fournissent respectivement une tension représentative de la puissance moyenne du signal modulé de chaque canal. On entend par basse fréquence dans l'expression "photodiode basse fréquence" des fréquences inférieures à la fréquence des signaux transmis. Typiquement, on considère dans l'exemple des signaux à 10 Gbit/s sur chaque canal; la photodiode peut être une photodiode dont la réponse en fréquence plafonne à quelques dizaines ou centaines de kHz; une photodiode fournit donc un signal donc la puissance est représentative de la puissance moyenne du signal modulé d'un canal, sur une fenêtre d'une longueur de l'ordre de quelques dizaines de milliers ou quelques millions de bits.

La tension fournie par chacune des photodiodes est appliquée à l'entrée non-inverseuse d'un amplificateur basse fréquence 18ᵢ, qui est monté en comparateur; le terme "basse fréquence" dans l'expression "amplificateur basse fréquence" signifie comme pour la photodiode que la réponse en fréquence de l'amplificateur plafonne à quelques dizaines ou centaines de kHz, par exemple. Chaque amplificateur reçoit sur son entrée inverseuse une tension de référence V_{REF}, et fournit en sortie une tension Cᵢ représentative de la différence entre la tension de sortie de la photodiode et la tension de référence.

La tension de sortie de chaque amplificateur 18ᵢ est appliqué à une entrée de contrôle d'un contrôleur de phase 20ᵢ ou décaleur de phase référencé Φᵢ sur la figure. De tels contrôleurs ou décaleurs de phase sont disponibles commercialement ou réalisables par des circuits électroniques génériques de type variés, i.e. analogique/numérique, hybride/intégré etc. Chaque contrôleur de phase reçoit par ailleurs une horloge de référence, et fournit en sortie une horloge Bᵢ dérivée de l'horloge de référence, et dont la phase est fonction de la tension appliquée à son entrée de contrôle. Dans le mode de réalisation de la figure 2, l'horloge de référence est fournie par un oscillateur commandé en tension (VCO) 22. L'horloge est réglée à la fréquence des signaux transmis sur chaque canal - 10 GHz dans l'exemple. On peut régler l'horloge de référence en faisant varier la tension appliquée à l'oscillateur, à l'installation ou en cours de fonctionnement; la figure 3 montre aussi un circuit de récupération d'horloge permettant de régler la tension appliquée à l'oscillateur.

Le fonctionnement de l'unité de génération d'horloge de la figure 2 est le suivant : la phase de l'horloge de référence appliquée à chaque contrôleur de phase 20ᵢ est réglée dans la boucle à verrouillage de phase formée du contrôleur de phase 20ᵢ, du modulateur, de la photodiode 16ᵢ et de l'amplificateur 18ᵢ. Pour un canal donné, le fonctionnement de la boucle à verrouillage de phase repose sur le fait que la puissance moyenne du signal modulé est maximale lorsque l'horloge de modulation Bᵢ est en phase avec le signal. La tension de sortie de la photodiode 16ᵢ varie entre une valeur minimale - pour un déphasage de π entre l'horloge de modulation et les signaux à moduler - et une valeur maximale lorsque l'horloge de modulation et les signaux à moduler sont en phase. Le rapport entre la valeur minimale et la valeur maximale dépend de la profondeur de modulation choisie, un déphasage de π "écrasant" les impulsions d'une valeur égale à la profondeur de modulation. Cette valeur maximale dépend de la proportion de "0" et de "1" dans les signaux à moduler et des caractéristiques des photodiodes, et comme expliqué plus bas, on choisit de préférence la tension de référence V_{REF} égale à cette valeur maximale.

Ainsi, pour une valeur aléatoire de la phase du signal de pilotage Bᵢ, la sortie du modulateur présente une puissance moyenne fonction de la phase, et la tension de sortie de la photodiode est comprise entre une tension nulle et la tension de référence V_{REF}. Si la tension de sortie de la photodiode est nulle, la tension différentielle fournie par l'amplificateur 18ᵢ est non nulle, et le contrôleur de phase 20ᵢ fait donc varier la phase de l'horloge Bᵢ. Lorsque la phase de l'horloge Bᵢ s'approche de la phase des signaux à moduler, la tension fournie par la photodiode s'approche de la tension de référence V_{REF}, et la tension de contrôle appliquée au contrôleur de phase 20ᵢ s'approche de zéro. La boucle a donc pour effet de verrouiller la phase de l'horloge Bᵢ sur la phase des signaux à moduler dans le canal correspondant.

L'utilisation de composants basse fréquence - photodiodes et amplificateurs différentiels - permet de limiter le coût de l'unité de distribution d'horloges de l'invention. On peut de fait utiliser des composants électroniques courants, moins onéreux. Il n'est notamment pas nécessaire dans le mode de réalisation des figures 1 et 2 de disposer d'une photodiode à haute vitesse, i. e. susceptible de fournir un signal variant sensiblement avec la fréquence des signaux transmis. L'unité de distribution d'horloges peut être implémentée sur une seule puce, par intégration des composants - photodiodes, amplificateurs, contrôleurs de phase - suivant une technologie Si ou Si-Ge.

Comme indiqué plus haut, la tension de référence V_{REF} est de préférence égale à la tension maximale fournie par la photodiode lorsque l'horloge pour le canal correspondant est en phase avec les signaux à moduler. De faibles variations entre la tension maximale des photodiodes et la tension de référence sont toutefois acceptables. De tels écarts peuvent aussi être corrigés par des dispositifs d'asservissement génériques plus complexes que la solution proposée plus bas, en particulier en couplage avec des signaux de supervision; dans un tel cas, la tension de référence pourrait être contrôlée à distance, en fonction des résultats de la supervision. Cette solution permet d'ajuster la tension de référence en fonction des fluctuations de puissance ou des imperfections du dispositif.

Une solution permettant d'assurer l'égalité entre la tension maximale fournie par les photodiodes et la tension de référence consiste à asservir cette tension de référence sur la tension moyenne des signaux modulés, comme expliqué en référence à la figure 3. Celle-ci montre une représentation schématique d'un autre mode de réalisation de l'unité de distribution d'horloges. On a porté à la figure, pour un seul canal, les éléments déjà décrits en référence à la figure 1 et à la figure 2. Dans ce mode de réalisation, le régénérateur présente un coupleur 24, qui prélève en sortie du multiplexeur 14 une partie des signaux modulés. Les signaux sont appliqués à une photodiode basse fréquence 26 - du genre des photodiodes 16ᵢ, qui fournit une tension représentative de la puissance moyenne des signaux des différents canaux. Cette tension est appliquée à un diviseur de tension 28, qui reçoit par ailleurs une tension de contrôle V_{C} et fournit en sortie une tension représentative de la puissance moyenne des signaux dans un canal. Le rapport de division du diviseur de tension 28 est fonction du nombre de canaux. La tension de contrôle V_{C} peut avantageusement être réglée à distance. On peut ainsi compenser à distance les variations dans le nombre de canaux, par exemple en cas d'interruption de la transmission sur canal pour réparation ou incident.

On pourrait aussi utiliser pour le réglage de la tension de référence une boucle à rétroaction, présentant une constante de temps supérieure à la boucle à verrouillage de phase utilisée pour régler les phases des horloges de modulation, de sorte à assurer que la tension de référence reste sensiblement constante même si les phases des horloges varient dans le temps.

La figure 3 montre en outre un mode de réalisation dans lequel le régénérateur présente en outre des moyens de récupération d'horloge. Le régénérateur présente en amont du démultiplexeur 2 un coupleur 30 pour prélever une partie des signaux multiplexés. Les signaux prélevés sont fournis à un filtre optique 32 qui filtre les signaux d'un canal de référence. Les signaux filtrés sont appliqués à un circuit de récupération d'horloge 34. En sortie, ce circuit fournit un signal représentatif de la fréquence d'horloge du canal de référence. Ce signal peut être utilisé pour piloter l'oscillateur commandé en tension. On pourrait aussi utiliser en lieu et place d'un oscillateur le circuit de récupération d'horloge, qui pourrait fournir directement l'horloge de référence, prenant elle-même référence sur un signal optique échantillonné dans le multiplex.

Le régénérateur de l'invention s'applique à tous les systèmes de transmission à multiplexage en longueur d'onde. Il permet une régénération optique des canaux, sans pour autant impliquer les contraintes d'une synchronisation préalable, ni induire une multiplication des composants nécessaires pour générer les différentes horloges de modulation.

Bien entendu, la présente invention n'est pas limitée aux exemples et modes de réalisation décrits et représentés, mais elle est susceptible de nombreuses variantes accessibles à l'homme de l'art. Dans les exemples, on a considéré le cas le plus simple où les canaux sont modulés séparément. Comme indiqué plus haut, certains des modulateurs ou tous les modulateurs pourraient moduler plusieurs canaux. On peut utiliser pour générer l'horloge de référence des solutions autres qu'un oscillateur commandé en tension, et par exemple un oscillateur à fréquence fixe, ou directement la sortie d'un circuit de récupération d'horloge lui-même asservi sur un canal de référence extrait du multiplex. On n'a pas représenté non plus à la ' figure les éléments tels que filtres ou amplificateurs qui peuvent être ajoutés dans un régénérateur.

## Revendications

1. Un régénérateur pour un système de transmission à multiplexage en longueur d'onde, comprenant un démultiplexeur (2) pour séparer les signaux de différents canaux, une pluralité de modulateurs optiques (4) recevant chacun des signaux provenant du démultiplexeur et une horloge de modulation (Bᵢ) provenant d'une unité de distribution d'horloges (16), et un multiplexeur (14) combinant les signaux modulés par les dits modulateurs, l'unité de distribution d'horloges présentant une horloge de référence (22) et, pour chacun des modulateurs, des moyens de mise en phase d'une copie de l'horloge de référence avec les signaux appliqués au modulateur.

2. Le régénérateur de la revendication 1, caractérisé en ce que les moyens de mise en phase comprennent pour chacun des modulateurs une boucle de verrouillage en phase.

3. Le régénérateur de la revendication 2, caractérisé en ce que la boucle de verrouillage en phase comprend un décaleur de phase (20ᵢ) recevant une copie de l'horloge de référence et fournissant une horloge de modulation, le décaleur de phase étant commandé en fonction de la puissance moyenne des signaux de sortie du modulateur.

4. Le régénérateur de la revendication 3, caractérisé en ce que la boucle de verrouillage en phase comprend un coupleur (12ᵢ) prélevant une partie des signaux de sortie du modulateur et une photodiode (16ᵢ) recevant les signaux provenant du coupleur et fournissant une tension représentative de la puissance moyenne des signaux de sortie du modulateur.

5. Le régénérateur de la revendication 4, caractérisé en ce que le décaleur de phase est commandé par un signal (Cᵢ)fonction de la différence entre la dite tension et une tension de référence (V_{REF}).

6. Le régénérateur de la revendication 5, caractérisé en ce que la tension de référence est fonction de la puissance totale des signaux en sortie du régénérateur.

7. Le régénérateur de la revendication 5, caractérisé en ce que la tension de référence est contrôlée à distance.

8. Le régénérateur de l'une des revendications 1 à 7, caractérisé en ce que l'horloge de référence est fournie par un oscillateur (22) commandé en tension.

9. Le régénérateur de la revendication 8, caractérisé en ce que l'oscillateur est commandé en fonction des signaux appliqués au régénérateur.

10. Le régénérateur de la revendication 8 ou 9, caractérisé en ce qu'il présente un coupleur (30) prélevant une partie des signaux d'entrée du régénérateur, un circuit de récupération d'horloge (34) recevant des signaux prélevés par le coupleur et fournissant en sortie un signal de commande de l'oscillateur

11. Un système de transmission à multiplexage en longueur d'onde, comprenant un régénérateur selon l'une des revendications 1 à 10.
